# EUROPÄISCHE PATENTANMELDUNG

(11) **EP 2 298 485 A1**
(43) Veröffentlichungstag der Anmeldung: **23.03.2011**
(21) Anmeldenummer: 10009213.9
(22) Anmeldetag: 06.09.2010
(51) Int. Cl.: B23K 9/173, B23K 9/29, B23K 9/32

(54) **Absaugvorrichtung für Roboterschweißbrenner**

(30) Priorität: 10.09.2009 DE 102009040711
(71) Anmelder: TBI Industries GmbH, 35643 Fernwald/Steinbach (DE)
(72) Erfinder: Binzel, Oliver, 4132 Muttenz (CH)

(57) **Zusammenfassung**

Die Erfindung betrifft eine Absaugvorrichtung für Roboterschweißbrenner, welche die beim Schweißen entstehenden Rauchgase und Schadstoffe möglichst nahe am Entstehungsort erfasst, wobei eine konzentrisch über einem Brennerhals (5) angeordnete Absaugdüse (1) auf einem Absauggehäuse (4) befestigt ist, weiches auf dem Brennerhals (5) befestigt ist und einen rückwärtigen Anschluss (6) für einen Absaugschlauch (2) aufweist.

## Beschreibung

Erfindungsgegenstand ist eine Absaugvorrichtung für Roboterschweißbrenner, welche die beim Schweißen entstehenden Rauchgase und Schadstoffe möglichst nahe am Entstehungsort erfasst.

Bekannte Lösungen zur Erfassung der Schweißrauche an automatisierten Anlagen sehen eine großflächige Absaugung der Luft über der gesamten und in sich weitgehend geschlossenen Schweißzelle vor, mit einem typischen Erfassungsbereich von ca. 4 Quadratmetern. Nachteilig bei dieser Lösung sind die große Investition in eine Filteranlage mit entsprechender Absaugkapazität sowie die hohen Betriebs- und Energiekosten für die Absaugung und Aufbereitung eines unnötig hohen Luftvolumens.

Andere Lösungen, insbesondere zur Verwendung mit Portalroboter mit sehr großem Verfahrbereich, bestehen aus separat vom Roboter angebrachten Erfassungselementen, z.B. Absaugrohren mit Ansaugtrichtem, welche über den Schweißstellen platziert sind und mit dem Roboter mitfahren. Diese Lösung funktioniert gut bei geradlinigen Nähten, ist jedoch unflexibel bei komplexen Schweißaufgaben. Tendenziell wird auch hier deutlich mehr Luft abgesaugt, als bei einer Erfassung sehr nahe am Entstehungsort nötig wäre.

Weitere Lösungen bestehen in Absaugvorrichtungen, welche direkt am Roboterbrenner montiert sind, typischerweise in Form eines oder mehrerer Röhrchen, die neben dem Roboterbrenner verlaufen und im vorderen Bereich Luft und Rauchgase ansaugen. Diese Lösung bringt gute Ergebnisse in vielen Fällen. Allerdirtgs entstehen bei wechselnden Schweißaufgaben und erschwerter Zugänglichkeit zum Werkstück erhebliche praktische Probleme, weil die Position der Röhrchen bei der Roboterprogrammierung bereits berücksichtigt werden muss und im Idealfall für Anfang und Ende einer Naht in Eckbereichen jeweils anders liegen sollte. Dies ist oft nicht hinreichend realisierbar. Auch bei der automatischen Brennerreinigung können die Röhrchen ein Hindernis sein.

Aus EP000000835711 ist ein Absaugbrenner für manuelle oder automatische Handhabung bekannt. Dieser weist eine konzentrische Absaugdüse, Absaugrohr und Absaugstutzen auf, welche im wesentlichen in fester Position auf dem Brennerhals montiert sind. Zusätzlich ist der gesamte Brennerhals inklusive der Absaugvorrichtung relativ zum Handgriff verdrehbar. Der beschriebene Aufbau ist für die Anwendung bei Roboterbrennern jedoch nicht geeignet. Das Absaugrohr ist fest auf dem Brenner montiert, was die Wartung und Justierung der Brennergeometrie stark erschwert. Weiterhin ist eine universelle Nachrüstbarkeit an bestehende Brenner nicht gegeben. Die Position der Absaugdüse ist ebenfalls festgelegt und kann nicht verändert werden. Auch ist die Absaugdüse starr und sehr weit vorne befestigt, was den Einsatz eines automatischen Brennerreinigungsgerätes unmöglich macht. Die vorliegende Erfindung vermeidet diese Nachteile und schafft zusätzliche Vorteile.

Die Erfindung wird im Hauptanspruch definiert und charakterisiert, während die abhängigen Ansprüche weitere Merkmale der Erfindung beschreiben.

Zweck der Erfindung ist es, eine Absaugvorrichtung für Roboterschweißbrenner zu schaffen, welche die Einsatzmöglichkeiten des Brenners aufgrund eines konzentrischen und sehr kompakten Aufbaus nur in minimaler Weise einschränkt und dennoch eine gute Erfassung der Rauchgase und Schadstoffe ermöglicht.

Ein weiterer Zweck der Erfindung ist es, die Reinigung des Roboterbrenners in konventionellen automatischen Brennerreinigungsgeräten ohne Einschränkungen zu ermöglichen.

Ein zusätzlicher Zweck der Erfindung ist es, eine Nachrüstung der Absaugeinrichtung an bestehenden Anlagen und Brennern ohne Änderungen an den vorhandenen Komponenten zu ermöglichen. Weiterhin ist es für Wartungszwecke und für die regelmäßige Justierung eines Roboterbrenners nötig, die Absaugvorrichtung mit möglichst geringem Arbeitsaufwand vom Brenner entfernen zu können.

Die erfindungsgemäße Vorrichtung weist eine konzentrisch über dem Brennerhals angeordnete Absaugdüse auf, welche auf einem Absauggehäuse befestigt ist. Dabei ist das Absauggehäuse wiederum auf dem Außenrohr des Brenners befestigt. Die konzentrische Anordnung der Absaugdüse ermöglicht eine sehr kompakte Bauform, so dass nur eine geringe Verdickung des Brenners entsteht. Weiter ist das Strömungsfeld der abgesaugten Luft im wesentlichen rotationssymmetrisch und von der Lage des Brenners zum Werkstück unabhängig. Insofern muss bei der Roboterprogrammierung nicht auf den Rotationswinkel des Brenners geachtet werden, was die Programmierung deutlich vereinfacht.

Die Absaugdüse ist zweckmäßigerweise einfach vom Absauggehäuse trennbar, so dass durch den Wechsel zwischen Absaugdüsen mit unterschiedlicher Geometrie die Vorrichtung leicht an die Erfordernisse der Schweißaufgabe angepasst werden kann. So bietet sich für das Arbeiten an großen Werkstücken ohne Platzeinschränkungen eine trichterförmige Düse an, für das Schweißen von Kehlnähten eine nach vorne verjüngte Düse mit seitlichen Öffnungen. Die Absaugdüsen sind als rotationssymmetrische Teile einfach herstellbar.

Bei einer vorteilhaften Variante der erfindungsgemäßen Absaugvorrichtung wird das Absauggehäuse auf dem Brennerhals geklemmt oder gespannt, so dass es in verschiedenen Positionen arretiert werden kann. Insbesondere eine Positionsanpassung nach vorne oder hinten, sowie rotatorisch um die Brennerachse, dienen der bestmöglichen Anpassung an die Schweißaufgabe und allfällige Platzeinschränkungen durch das Werkstück. So kann z.B. der Anschluss für den Absaugschlauch Jederzeit in die am wenigsten störende Position gedreht werden.

Zur einfachen Anpassung an verschiedene Brennergeometrien kann zwischen dem Brennerhals und dem Absauggehäuse eine Adapterhülse angeordnet werden. Somit ist es möglich, das Durchgangsloch für den Brenner im Absauggehäuse mit einem genügend großen Durchmesser auszuführen, um unterschiedliche Brennerköpfe durchführen zu können. Eine Anfertigung von unterschiedlichen Absauggehäusen für die verschiedenen marktüblichen Brenner wird vermieden, was die Produktionskosten deutlich senkt. Die Adapterhülse kann aus einem biegsamen Material, z.B. einem Kunststoff, hergestellt werden und geschlitzt oder aus mehreren Teilen aufgebaut werden, so dass sie auf den Brennerhals aufgeschoben werden, bzw. seitlich auf den Brenner aufgeklipst werden kann. Die Adapterhülse sorgt für festen Sitz des Absauggehäuses auf dem Brennerhals und dichtet gleichzeitig zwischen Brennerhals und Absauggehäuse ab, was wichtig für eine effiziente Absaugung ist. Das Absauggehäuse weist einen Anschluss für einen Absaugschlauch auf, der eine flexible Verbindung zwischen der Absaugvorrichtung und einem Flltergerät bildet.

Zur Montage an stark gebogenen Brennerhälsen kann es vorteilhaft sein, das Absauggehäuse in zwei Hälften oder einer größeren Anzahl an einfachen Teilen auszuführen, so dass es direkt auf dem Brennerhals zusammengesetzt werden kann, und nicht über die Biegung geschoben werden muss.

Bei der Reinigung des Brenners in marktüblichen automatischen Reinigungsgeräten wird der Brennerkopf In eine Vorrichtung eingefahren. Dort wird häufig die Gasdüse des Brenners mechanisch gespannt. Für die ordnungsgemäße Funktion dieser Geräte muss die Gasdüse auf ausreichender Länge frei zugänglich sein. Dies widerspricht der Anforderung, die Absaugdüse möglichst nahe der Schweißstelle zu positionieren, da In diesem Fall die Gasdüse von der Absaugdüse verdeckt ist und nicht mehr im Reinigungsgerät gespannt werden kann. Dieses Problem wird erfindungsgemäß gelöst durch eine bewegliche Lagerung der Absaugdüse auf einem oder mehreren Führungselementen. Beim Schweißen wird die Absaugdüse in der vorderen Position gehalten. Wenn der Brenner in ein Reinigungs- oder Wartungsgerät eintaucht, so kann die Absaugdüse auf dem Führungselement nach hinten gleiten. Beim Ausfahren aus dem Reinigungsgerät wird die Absaugdüse durch ein Federelement wieder in die Arbeitsposition bewegt. In dieser Arbeitsposition soll die Verbindung zwischen Absaugdüse und Absauggehäuse möglichst gasdicht sein, was sich durch den Einbau eines geeigneten Dichtelementes im Bereich der Führungselemente realisieren lässt. Die Erfindung weist somit einen großen Fortschritt gegenüber dem heutigen Stand der Technik auf, indem sie eine energiesparende Absaugung der Schweißrauche nahe am Entstehungsort erlaubt, und gleichzeitig die Weiterverwendung üblicher Reinigungsgeräte ermöglicht.

Die Erfindung lässt sich auf einfache Art auch an Mehrdrahtschweißbrenner mit einem gemeinsamen Brennerrohr oder mehreren miteinander verbundenen Brennerhälsen adaptieren. Je nach Ausführungsart des Brenners kann eine zweckmäßige Adapterhülse entworfen werden oder das Absauggehäuse mehrteilig ausgeführt werden.

Die folgende Beschreibung zeigt eine bevorzugte Ausführungsform der Erfindung, die ein nicht einschränkendes Beispiel darstellt und in der auf die folgenden Zeichnungen Bezug genommen wird:

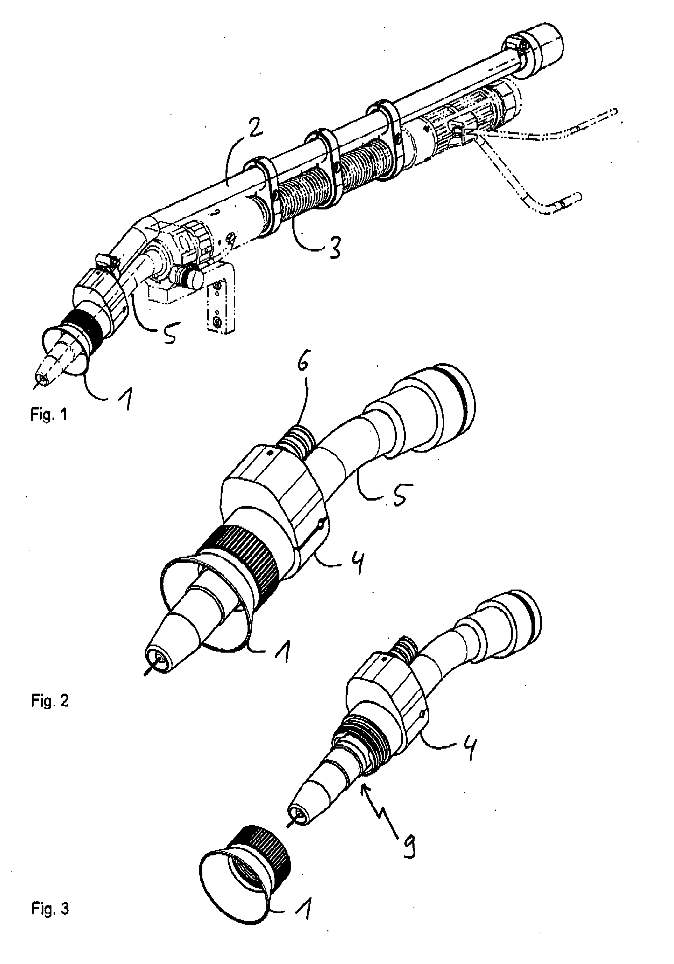

Fig. 1 zeigt eine Gesamtansicht der erfindungsgemäßen Vorrichtung montiert auf einem Brennerhals (5) und Brennerschlauchpaket (3)
Fig. 2 zeigt eine Vergrößerung der erfindungsgemäßen Absaugvorrichtung auf einem Brennerhals (5), der Absaugschlauch (2) ist nicht dargestellt
Fig. 3 zeigt die erfindungsgemäße Absaugvorrichtung mit abgenommener Absaugdüse (1), welche schraubbar ausgeführt ist

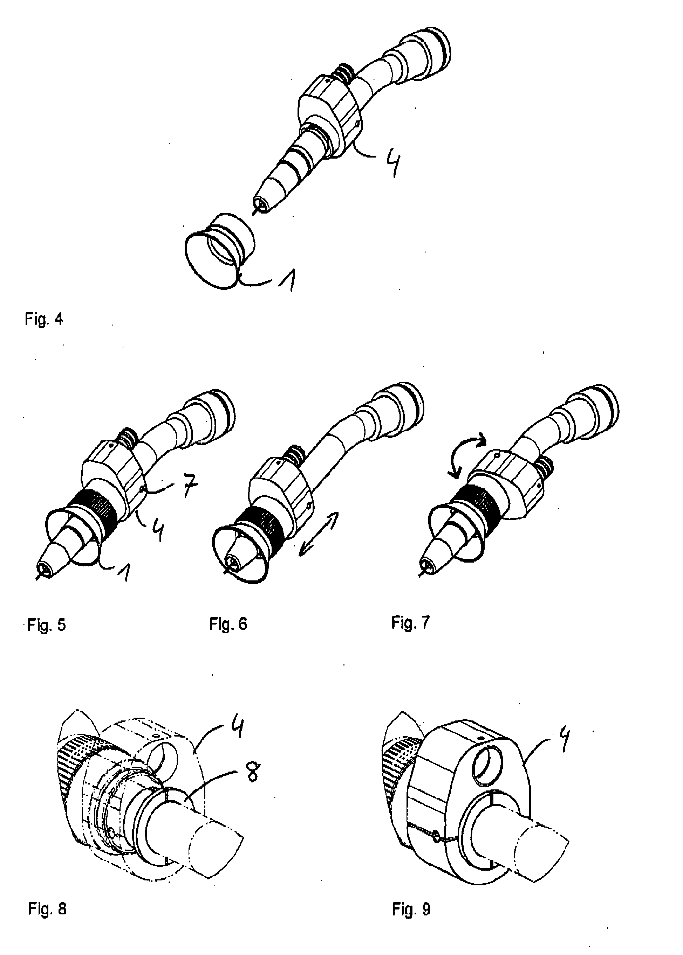

Fig. 4 zeigt die erfindungsgemäße Absaugvorrichtung mit abgenommener Absaugdüse (1), welche steckbar ausgeführt ist
Fig. 5 und Fig. 6 zeigen die erfindungsgemäße Absaugvorrichtung jeweils in unterschiedlicher Position auf einem Brennerhals (5) fixiert
Fig. 7 zeigt die erfindungsgemäße Absaugvorrichtung auf einem Brennerhals (5), mit 90° verdreht montiertem Absauggehäuse (4)
Fig. 8 zeigt eine Variante mit einer geschlitzten Adapterhülse (8), wobei das Absauggehäuse (4) transparent dargestellt ist
Fig. 9 zeigt eine Variante mit einem geteilten Absauggehäuse (4)

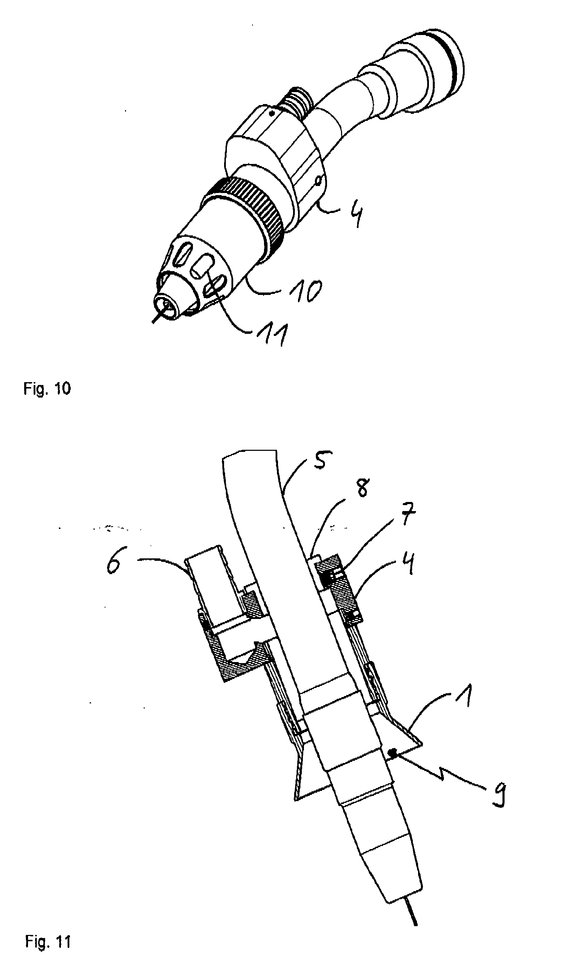

Fig. 10 zeigt die erfindungsgemäße Absaugvorrichtung ausgerüstet mit einer konische Absaugdüse (10) für schwer zugängliche Bereiche
Fig. 11 zeigt einen Querschnitt der erfindungsgemäßen Absaugvorrichtung auf einem Brennerhals (5)

Gemäß den Zeichnungen kann eine erfindungsgemäße Vorrichtung mittels weniger Bauteile aufgebaut werden. Auf dem Brennerhals (5) ist zunächst eine geschlitzte Adapterhülse (8) aus einem elastischen Kunststoff angeordnet, welche nachträglich über den im Durchmesser dickeren Brennerkopf (9) gezogen werden kann. Diese Adapterhülse (8) wird passend zum Brennerhals (5) so ausgeführt, dass sie den Zwischenraum zwischen der Durchgangsbohrung des Absauggehäuses (4) und dem Brennerhals (5) möglichst dicht ausfüllt. Das Absauggehäuse (4) besteht beim vorgestellten Ausführungsbeispiel aus einem gefrästen Körper, der im hinteren Bereich eine Aufnahme für die Adapterhülse (8) aufweist, im vorderen Bereich eine Aufnahme für die Absaugdüse (1). Letzteres ist im Beispiel mit einem Gewinde gelöst. Das Absauggehäuse (4) ist innen ausgehöhlt um genügend freien Querschnitt für die durchströmenden Gase zu schaffen. Am hinteren Ende des Absauggehäuses (4) ist ein Anschluss (6) befestigt, auf den sich ein Absaugschlauch (2) aufschieben lässt. Im Bereich der Adapterhülse (8) sind 1-3 auf den Brennerhals (5) gerichtete Gewindebohrungen angeordnet. In diese wird jeweils eine Madenschraube (7) eingeschraubt, und mit diesen die Vorrichtung auf dem Brennerhals (5) fixiert. Die Madenschrauben (7) drücken dabei bevorzugt auf die Adapterhülse (8), so dass Kratzer auf dem Brennerhals (5) vermieden werden. Die Position der Vorrichtung kann somit auf einfache Art verändert werden.

Die Absaugdüse (1, 10) entspricht bekannten Ausführungsformen, wobei zwischen konischen und trichterförmigen oder anderweitig ausgebildeten Düsenformen frei gewählt werden kann. Die Absaugdüse wird bevorzugt auf das Absauggehäuse (4) geschraubt, eine gesteckte Variante ist alternativ möglich.

Im hinteren Bereich der Vorrichtung wird ein Absaugschlauch (2) mit einem Durchmesser von typischerweise ca. 20 mm auf dem dafür vorgesehenen Anschluss (6) befestigt. Dieser Schlauch wird dann parallel zum Brennerschlauchpaket (3) geführt, und kann mit geeigneten Befestigungsmittein, z.B. Klammern, an diesem befestigt werden. Der Schlauch wird im weiteren Verlauf zum Filtergerät geführt, wobei nach einer Länge von 2-4 m typischerweise mit einem Adapterstück auf einen größeren Durchmesser gewechselt wird, um den Druckverlust im Schlauch zu begrenzen.

Für die Anwendung bei Schweißanlagen mit automatischem Reinigungssystem ist es besonders vorteilhaft, die Absaugdüse (1) auf einer Führungshülse axial beweglich zu lagern. Dies lässt sich in der Praxis so ausführen, dass das Absauggehäuse (4) am vorderen Ende mit einer zylindrischen Führungsfläche ausgeführt wird. Auf dieser Führungsfläche ist eine dünnwandige Führungshülse angeordnet, welche auf der Führungsfläche vor- und zurück gleiten kann. Nachdem die Führungshülse auf die Führungsfläche aufgeschoben wurde, wird am vorderen Ende der Führungsfläche ein Endanschlag angebracht, der verhindert, dass die Führungshülse nach vorne herunterfällt. Dieser Endanschlag kann z.B. durch einen auf die Führungsfläche aufgesetzten Federring gebildet werden. Es ist vorteilhaft, zwischen Absauggehäuse (4) und Führungshülse eine Feder anzuordnen, welche sicherstellt, dass ohne externe Krafteinwirkung auf die Vorrichtung die Führungshülse immer an den vorderen Endanschlag der Führungsfläche gedrückt wird. Auf die Führungshülse wird nun die Absaugdüse (1) geschraubt. Beim Einfahren in ein automatisches Brennerreinigungsgerät stößt die Absaugdüse (1) am Gerät an, und wird mitsamt der Führungshülse entgegen der Federkraft nach hinten in Richtung Absauggehäuse (4) geschoben.

Eine weitere Verbesserung der beschriebenen erfindungsgemäßen Vorrichtung wird erreicht durch die Anordnung einer Dichtung zwischen Führungshülse und Führungsfläche, welche mindestens in der vorderen Arbeitsposition das Ansaugen von Falschluft durch den Spalt zwischen diesen beiden Bauteilen verhindert. Die Dichtung lässt sich realisieren durch den Einbau eine O-Rings in der Führungshülse, so dass der O-Ring auf der Führungsfläche gleitet.

## Patentansprüche

1. Absaugvorrichtung für Roboterschweißbrenner mit einer konzentrisch über einem Brennerhals (5) angeordneten Absaugdüse (1),
**dadurch gekennzeichnet,**
**dass** eine Absaugdüse (1) auf einem Absauggehäuse (4) befestigt ist, welches auf dem Brennerhals (5) befestigt ist und einen rückwärtigen Anschluss (6) für einen Absaugschlauch (2) aufweist.

2. Absaugvorrichtung nach Anspruch 1,
**dadurch gekennzeichnet,**
**dass** die Absaugdüse (1) leicht wechselbar ist, z.B. durch eine Steck-Klemm- oder Schraubbefestigung

3. Absaugvorrichtung nach einem der vorhergehenden Ansprüche,
**dadurch gekennzeichnet,**
**dass** die Absaugdüse (1) trichterförmig ausgeführt ist.

4. Absaugvorrichtung nach einem der Ansprüche 1 bis 2,
**dadurch gekennzeichnet,**
**dass** die Absaugdüse (10) sich nach vorne konisch verjüngt, und im konischen Teil mit radial angeordneten Öffnungen (11) versehen ist.

5. Absaugvorrichtung nach einem der vorhergehenden Ansprüche,
**dadurch gekennzeichnet,**
**dass** das Absauggehäuse (4) auf dem Brennerhals (5) translatorisch und rotatorisch verschoben werden kann und in der gewünschten Position mittels einer Klemmvorrichtung arretiert wird.

6. Absaugvorrichtung nach Anspruch 5,
**dadurch gekennzeichnet,**
**dass** die Klemmvorrichtung in Form einer in ein Absauggehäuse (4) eingeschraubten und auf einen Brennerhals (5) wirkenden Madenschraube (7) ausgeführt ist.

7. Absaugvorrichtung nach einem der vorhergehenden Ansprüche,
**dadurch gekennzeichnet,**
**dass** ein Absauggehäuse (4) mittels einer Passhülse (8) auf einem Brennerhals (5) montiert wird.

8. Absaugvorrichtung nach Anspruch 7,
**dadurch gekennzeichnet,**
**dass** die Passhülse (8) geschlitzt oder in 2 Hälften ausgeführt ist.

9. Absaugvorrichtung nach einem der vorhergehenden Ansprüche,
**dadurch gekennzeichnet,**
**dass** das Absauggehäuse (4) zwei- oder mehrteilig ausgeführt ist.

10. Absaugvorrichtung nach einem der vorhergehenden Ansprüche,
**dadurch gekennzeichnet,**
**dass** die Absaugdüse (1) auf dem Absauggehäuse (4) axial nach hinten verschiebbar gelagert ist.

11. Absaugvorrichtung nach einem der vorhergehenden Ansprüche,
**dadurch gekennzeichnet,**
**dass** die Absaugdüse (1) auf einer Führungshülse befestigt ist, und diese Führungshülse auf dem Absauggehäuse (4) axial nach hinten verschiebbar gelagert ist.

12. Absaugvorrichtung nach Anspruch 10 oder 11,
**dadurch gekennzeichnet,**
**dass**, zwischen dem Absauggehäuse (4) und der Absaugdüse (1) oder der Führungshülse ein Federelemente angeordnet ist, welches die Absaugdüse (1) bzw. die Führungshülse an einen vorderen Anschlag drückt.

13. Absaugvorrichtung nach einem der Ansprüche 10 - 12,
**dadurch gekennzeichnet,**
**dass** zwischen der Absaugdüse (1) und dem Absauggehäuse (4), bzw. der Führungshülse, ein Dichtelement angeordnet ist, welches in der Arbeitsposition der Absaugdüse (1) eine Abdichtung zwischen der Absaugdüse und dem Absauggehäuse (4) bewirkt.

14. Absaugvorrichtung nach einem der vorhergehenden Ansprüche
**dadurch gekennzeichnet,**
**dass** diese über einem gemeinsamen Brennerrohr oder über 2 fest miteinander verbundenen Brennerhälsen eines Mehrdrahtschweißbrenners angeordnet ist.
